# EUROPÄISCHE PATENTSCHRIFT

(11) **EP 0 733 003 B1**
(45) Veröffentlichungstag und Bekanntmachung des Hinweises auf die Patenterteilung: **30.07.1997**
(21) Anmeldenummer: 95905085.7
(22) Anmeldetag: 19.12.1994
(51) Int. Cl.: B60P 3/055, B60P 1/02, B62D 21/04

(54) **FAHRZEUG MIT EINEM AUFBAU**
VEHICLE WITH SUPERSTRUCTURE
VEHICULE COMPORTANT UNE SUPERSTRUCTURE

(30) Priorität: 21.12.1993 DE 4343655; 02.12.1994 DE 4442939
(43) Veröffentlichungstag der Anmeldung: 25.09.1996
(73) Patentinhaber: Hoenersch, Klaus, D-86199 Augsburg (DE); Helget, Rudolf, D-89428 Syrgenstein (DE); Hurler, Walter, D-86316 Friedberg (DE)
(72) Erfinder: Hoenersch, Klaus, D-86199 Augsburg (DE); Helget, Rudolf, D-89428 Syrgenstein (DE); Hurler, Walter, D-86316 Friedberg (DE)
(74) Vertreter: Lorenz, Werner, Dipl.-Ing.
(86) Internationale Anmeldenummer: EP9404224
(87) Internationale Veröffentlichungsnummer: WO9517319

(56) Entgegenhaltungen:
- DE-A- 4 114 044
- DE-U- 8 234 715
- DE-U- 9 408 263
- FR-A- 2 179 890
- FR-A- 2 263 925
- FR-A- 2 504 465
- GB-A- 1 601 320
- GB-A- 2 059 885
- US-A- 3 319 975
- US-A- 4 570 973

## Beschreibung

Die Erfindung betrifft ein Fahrzeug mit einem Aufbau nach der im Oberbegriff von Anspruch 1 näher definierten Art.

Zum Beladen und Entladen von Lastkraftwagen müssen oftmals Gabelstabler oder ähnliche Hubeinrichtungen eingesetzt werden, um das Ladegut vom Boden auf die oftmals relativ hoch liegende Ladefläche und auch wieder herunterzuheben, sofern das Anheben und Absenken nicht von Hand erfolgt. Dieses Verfahren ist sehr zeitaufwendig und somit teuer, da der Gabelstapler immer jeweils nur einen Teil des Ladegutes bei einem Ladevorgang aufnehmen kann und daher mehrmals Waren aufnehmen, auf den Lastkraftwagen heben, und dort absetzen muß.

Ein weiterer Nachteil dieses Verfahrens zum Be- und Entladen eines Lastkraftwagens ist, daß überhaupt ein Gabelstapler vorhanden sein muß, damit die Fracht be- und entladen werden kann. Aus diesem Grunde wird in vielen Lastkraftwagen ein zusammenklappbarer Gabelstapler mitgeführt, so daß kein Gabelstapler am Zielort vorhanden sein muß. Allerdings werden durch das Mitführen eines derartigen Gabelstaplers die maximale Nutzlast und der maximal nutzbare Laderaum des Lastkraftwagens verringert, so daß die Wirtschaftlichkeit des Lastkraftwagens unter dieser Lösung leidet.

Es ist zwar möglich, den Gabelstapler an der Rückwand des Lastkraftwagens außenseitig anzubringen, allerdings muß dieser dann durch sehr teure und aufwendige Vorrichtungen vor dem Herunterfallen auf die Straße gesichert werden.

Ein gattungsgemäßes Fahrzeug ist aus der DE 41 14 044 A1 bekannt. In der genannten Druckschrift ist ein Lastkraftwagen mit einer Einrichtung für den Transport von Kisten, Stückgütern, Waren oder verschiedenen Materialien im gestapelten Zustand beschrieben. Die Einrichtung wird von einem am Fahrgestell befestigten Traggestell und von einer beweglichen Struktur gebildet, die an beiden Fahrzeugseiten angeordnete und offene Abteile bildet und in der Höhe zwischen einer auf den Erdboden abgesenkten Stellung zum Laden/Entladen des Materials und einer angehobenen Stellung für die Fahrt des Fahrzeugs auf der Straße verstellbar ist.

Des weiteren ist das bekannte Fahrzeug mit einem feststehenden Dach, unter welchem die offenen Abteile vorgesehen sind, versehen.

In der DE-U-94 08 263 ist ein Nutzfahrzeug, insbesondere Getränkefahrzeug, mit tiefliegender Ladepritsche offenbart. Bei diesem Fahrzeug sind zumindest Teile der Ladepritsche bis zum Boden absenkbar an einem auf den Achsen abgestützten Mittelrahmen aufgehängt. Des weiteren sind die Seitenwände des Fahrzeuges und das Dach des Aufbaus über an den Enden der absenkbaren Ladepritschen-Abschnitte angeordnete Querträger starr am Mittelrahmen aufgehängt.

Nachteilig an den vom Stand der Technik bekannten Fahrzeugen ist jedoch, daß deren Stabilität, insbesondere bei Torsionsbewegungen um die Mittellängsachse des Fahrzeuges, verhältnismäßig gering ist, da die Verbindung zwischen Vorder- und Hinterachse des jeweiligen Fahrzeuges im wesentlichen nur über einen Mittelträger und die Gelenkwelle zum Antrieb der Hinterachse erfolgt, so daß von diesen Bauteilen, insbesondere von dem Mittelträger bzw. Mittelrahmen, nahezu die gesamten angreifenden Kräfte aufgenommen werden müssen.

Ein weiterer Nachteil der bekannten Fahrzeuge ist, daß diese insbesondere an Rampen schlecht be- und entladbar sind, so daß das Be- und Entladen an Rampen bei diesen Fahrzeugen nur mittels geeigneter externer Hubeinrichtungen, wie beispielsweise Gabelstaplern, möglich ist.

Der vorliegenden Erfindung liegt die Aufgabe zugrunde, ein Fahrzeug mit einem Aufbau vorzusehen, welches eine gegenüber dem Stand der Technik verbesserte Stabilität aufweist und das leicht und schnell be- und entladbar ist.

Erfindungsgemäß wird diese Aufgabe dadurch gelöst, daß das Dach eine Dachverstrebung zur Aufnahme wenigstens eines Teils der an dem Fahrzeug angreifenden Kräfte aufweist, und daß die Ladeboxen aus der Stellung im normalen Fahrbetrieb auf Rampenhöhe anhebbar sind, wobei während des normalen Fahrbetriebes des Fahrzeuges zwischen den Ladeboxen und dem Dach ein Freiraum verbleibt.

Durch das Vorsehen einer Dachverstrebung, welche wenigstens einen Teil der an dem Fahrzeug angreifenden Kräfte aufnimmt, ist das erfindungsgemäße Fahrzeug gegenüber den vom Stand der Technik bekannten Fahrzeugen wesentlich stabiler, da nunmehr nicht nur in den Mittelträger nahezu sämtliche angreifenden Kräfte eingeleitet werden müssen, sondern wenigstens ein Teil der Kräfte auch von der Dachverstrebung aufgenommen wird.

Durch die Möglichkeit des Anhebens der Ladeboxen aus der Stellung im normalen Fahrbetrieb auf Rampenhöhe, insbesondere Kopframpenhöhe, kann das erfindungsgemäße Fahrzeug an Rampen bzw. Kopframpen sehr leicht und einfach be- und entladen werden, da der Aufbau lediglich auf die Höhe der Rampe angehoben wird, so daß das Fahrzeug beispielsweise mittels Sackkarren, Hubwagen oder auch manuell be- und entladen werden kann.

Ein Fahrbetrieb des Fahrzeuges mit bereits auf Rampenhöhe angehobenen Ladeboxen oder dergleichen wäre zwar theoretisch denkbar, jedoch aufgrund der ungünstigen hohen Schwerpunktlage und der dadurch an dem Mittelträger angreifenden weiter erhöhten Kräfte und Momente ist diese Möglichkeit in der Praxis kaum ausführbar. Des weiteren würden sich durch den hohen Schwerpunkt, insbesondere in beladenem Zustand des Fahrzeuges, ungünstige Fahreigenschaften ergeben.

Zwar bleibt im normalen Fahrbetrieb des Fahrzeuges bei dieser Anordnung zwischen den Ladeboxen und dem Dach des Fahrzeuges ein Freiraum, welcher nicht für Fracht zur Verfügung steht, allerdings wird dieser Nachteil durch die Möglichkeit des schnellen Be- und Entladens an Rampen mehr als kompensiert.

Durch die vom Stand der Technik bekannte Möglichkeit des Absenkens der Ladeboxen bis zur Fahrbahnebene kann das erfindungsgemäße Fahrzeug somit in jeder Situation schnell und einfach be- und entladen werden.

Die Ladeboxen können paarweise, d.h. zwei Ladeboxen, die bezüglich des Mittelträgers symmetrisch angeordnet sind, bewegbar sein, oder es kann auch vorgesehen sein, daß, falls geeignete Einrichtungen zusätzlich angebracht sind, jede Ladebox einzeln bewegbar ist.

In vorteilhafter Ausgestaltung der Erfindung kann vorgesehen sein, daß die Träger der Dachverstrebung diagonal über den Ladeboxen über die gesamte nutzbare Länge des Fahrzeugaufbaues angeordnet sind.

Durch eine mögliche Anordnung der Träger der Dachverstrebung diagonal über den Ladeboxen über die gesamte nutzbare Länge des Fahrzeugaufbaues läßt sich die Steifigkeit des Aufbaus weiterhin erhöhen.

Vorteilhafterweise kann die Dachverstrebung an mehreren weitgehend senkrecht zur Fahrbahnoberfläche verlaufenden Veltikalträgern angebracht sein.

Die Vertikalträger bewegen sich hierbei nicht mit, so daß die Vertikalträger zusammen mit der bereits erwähnten Dachverstrebung und weiteren, nachfolgend beschriebenen Trägern, ein Gerippe bzw. einen Rahmen bilden, welcher sehr robust ist und daher verhältnismäßig große auftretende Kräfte aufnehmen kann.

Auf diese Weise entsteht aus der Dachverstrebung und den Vertikalträgern ein stabiler Rahmen, der eine zu starke Tordierung des Mittelträgers vermeidet.

Die Vertikalträger können auch an quer zur Fahrzeuglängsachse verlaufenden Querträgern angebracht sein.

Diese Querträger können, soweit sie nicht das Absenken der Ladeboxen behindern, unterhalb der Ladeboxen oder beispielsweise zwischen einzelnen Ladeboxen angeordnet sein, was ebenfalls mit dazu beiträgt, den gesamten Fahrzeugaufbau auszusteifen.

Zum Absenken bzw. Anheben der Ladeboxen kann die Hubeinrichtung hydraulisch oder pneumatisch angetrieben sein. Da in sehr vielen Lastkraftwagen bereits Hydraulik- oder Pneumatiksysteme zum Antrieb verschiedenster Vorrichtungen vorhanden sind, kann die beschriebene Vorrichtung auf diese Art und Weise einfach und kostengünstig angetrieben werden.

Die Hubeinrichtung kann jedoch auch vorteilhaft als Hubspindel ausgeführt sein, welche beispielsweise von einem Elektromotor angetrieben ist.

Über das Bordspannungsnetz des Lastkraftwagens kann auch ein Antriebsmotor für eine derartige Hubspindel problemlos angetrieben werden.

Damit die einzelnen Antriebseinrichtungen mit einer verhältnismäßig geringen Antriebsleistung auskommen, können diese an Stellen des erfindungsgemäßen Fahrzeugaufbaus plaziert werden, an denen eine günstige Krafteinleitung bzw. Kraftübertragung auf die Aufnahmeeinrichtung möglich ist.

Die Hubeinrichtungen können daher vorteilhaft auf dem Mittelträger angeordnet sein, da aus Symmetriegründen von dem Mittelträger aus, welcher parallel zur Fahrzeuglängsachse des Lastkraftwagens verläuft, eine gleichmäßige Krafteinleitung in alle Richtungen möglich ist.

Hierbei kann beispielsweise vorgesehen sein, daß für jedes Paar Ladeboxen eine eigene Hubeinrichtung vorgesehen ist, so daß nicht alle Ladeboxen zusammen bewegt werden müssen, sondern auch ein Heben oder Senken eines Ladeboxenpaares möglich ist.

In vorteilhafter Weise kann jede Ladebox in wenigstens zwei Führungsschienen geführt sein.

Hierdurch wird ein Verkanten der Ladeboxen beim Anheben und Absenken verhindert, selbst dann, wenn die einzelnen Ladeboxen ungleichmäßig beladen sein sollten.

Die Führungsschienen können auch in die bereits erwähnten Vertikalträger integriert sein, so daß die Führungsschienen keinen zusätzlichen Bauraum beanspruchen.

In einer vorteilhaften Weiterbildung der Erfindung kann vorgesehen sein, daß jede Ladebox durch wenigstens eine Sicherungseinrichtung gesichert ist.

Durch das Vorsehen einer zusätzlichen Sicherungseinrichtung wird gewährleistet, daß ein unbeabsichtigtes Absenken der Ladeboxen auf die Fahrbahn, beispielsweise während der Fahrt des Lastkraftwagens, vermieden wird, und das Fahrzeug somit keinerlei Gefahrenzustände herbeiführen kann.

Die Sicherungseinrichtung kann z.B. als Pneumatikzylinder ausgeführt sein, welcher die Ladeboxen in angehobenem Zustand gegen ein unbeabsichtigtes Absenken verriegelt.

Um die Ladung vor Witterungseinflüssen zu schützen, können die Ladeboxen durch Türen oder Jalousien verschließbar sein.

Nachfolgend sind anhand der Zeichnung zwei Ausführungsbeispiele der Erfindung prinzipmäßig beschrieben.

Es zeigt:
- Fig. 1: eine Seitenansicht eines Lastkraftwagens, der mit einem erfindungsgemäßen Aufbau versehen ist;
- Fig. 2: eine Draufsicht auf einen Lastkraftwagen, der mit einem erfindungsgemäßen Aufbau versehen ist;
- Fig. 3: einen Schnitt entlang der Linie III-III von Fig. 1;
- Fig. 4: einen Schnitt entlang der Linie IV-IV von Fig. 1; und
- Fig. 5: eine Ansicht eines Ausführungsbeispieles einer Dachverstrebung.

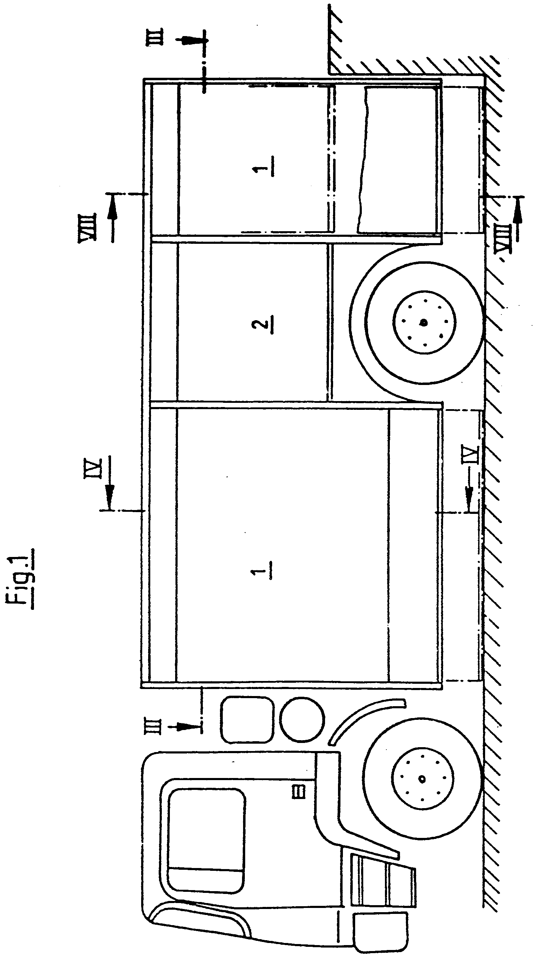

Bezugnehmend auf Fig. 1 ist eine Seitenansicht eines erfindungsgemäßen Fahrzeuges dargestellt.

Das Fahrzeug weist absenkbare Ladeboxen 1, sowie im Bereich der Hinterachse des Fahrzeuges einen nicht absenkbaren Frachtraum 2 auf. Da der Frachtraum 2 aufgrund der unter ihm angeordneten Achse nicht absenkbar ausgeführt werden kann, kann er beispielsweise zur Unterbringung der Steuerungs- und Bedienungselemente zum Heben und Senken der Ladeboxen 1 verwendet werden. Alternativ kann der Frachtraum 2 selbstverständlich auch zum Unterbringen von Ladung genutzt werden, wobei auch vorgesehen sein kann, daß eine Durchlademöglichkeit von einer am Heck des Fahrzeuges angeordneten Ladebox 1 durch den Frachtraum 2 hindurch in eine weitere Ladebox 1 möglich ist.

Dies ist insbesondere dann von Vorteil, wenn der Lastkraftwagen rückwärts an eine sogenannte Kopframpe heranfährt.

Die Ladeboxen 1 können dann auf die Höhe der Kopframpe, die üblicherweise 1.000 mm beträgt, angehoben werden, so daß, wie in der Fig. 1 durch die strichpunktierte Linie dargestellt, sämtliche Ladeboxen 1 bzw. deren Böden auf gleicher Höhe stehen wie die Böden des Frachtraumes 2. Voraussetzung für diese Möglichkeit des Durchladens ist jedoch, daß an der Rückseite des Lastkraftwagens Türen, Jalousien oder dergleichen zum Beladen der Ladeboxen 1 und des Frachtraumes 2 vorhanden sind.

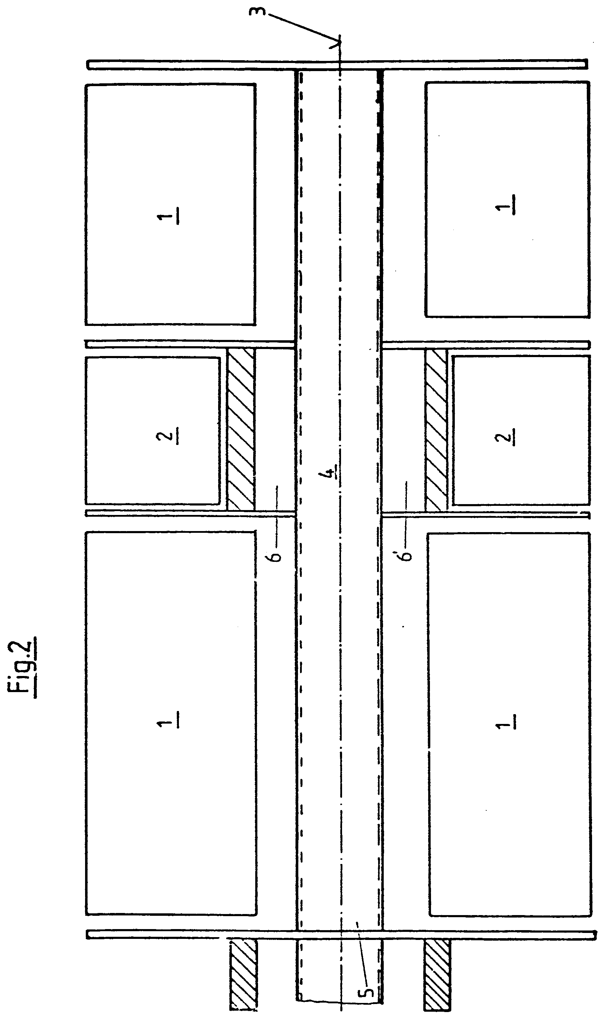

Fig. 2 zeigt eine Draufsicht auf das Fahrzeug der Fig. 1, wobei auf die Darstellung der kompletten Dachverstrebung aus Übersichtlichkeitsgründen verzichtet wurde.

Symmetrisch zur Mittellängsachse 3 des Lastkraftwagens sind die Ladeboxen 1 und die Frachträume 2 angeordnet. Auf die Darstellung der Fahrerkabine des Fahrzeuges wurde verzichtet.

Symmetrisch und parallel zur Mittellängsachse 3 des Fahrzeuges erstreckt sich ein Mittelträger 4, der in dem vorliegenden Ausführungsbeispiel aus einem genormten Vierkantrohr besteht, und an dem Querstreben (nicht dargestellt) sowie die Ladeboxen 1 und die Frachträume 2 befestigt sind.

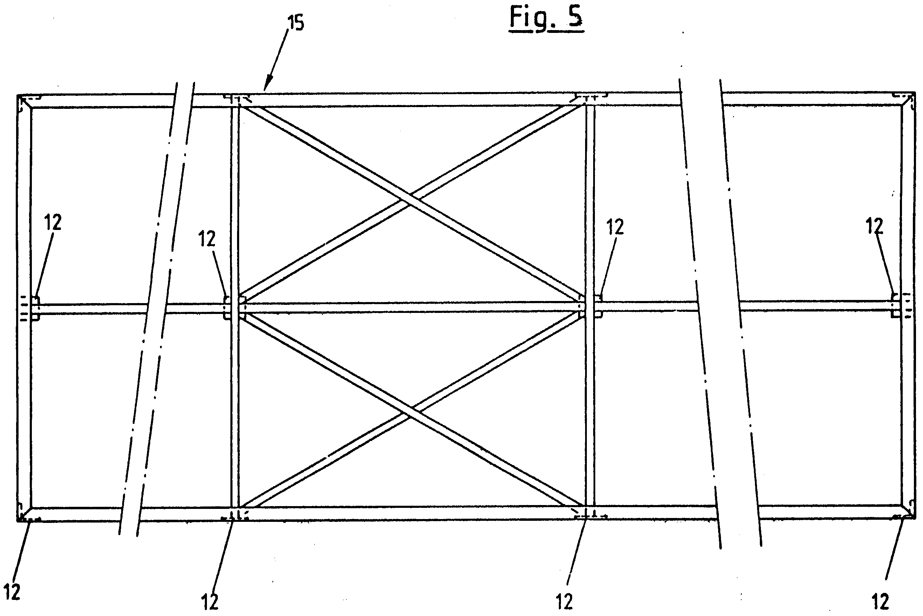

Den Aufbau eines Mittelträgers 4' in einer anderen Ausgestaltung, wie er aus Einzelprofilen hergestellt sein kann, zeigt in vergrößerter Darstellung Fig. 5.

Der Mittelträger 4' setzt sich in dem beschriebenen Ausführungsbeispiel nach Fig. 5 aus einem Vierkantrohr 5 und einem Paar großer U-Profile 6, 6' und einem Paar kleiner U- Profile 7, 7' zusammen. Die Einzelprofile werden durch Schraub- und/oder Nietverbindungen miteinander verbunden, so daß kein Verzug des Mittelträgers 4' auftreten kann, was eventuell beim Verschweißen der Einzelprofile der Fall wäre. Durch den Aufbau des Mittelträgers 4' aus verschiedenen Einzelprofilen wird auch eine sehr hohe Biege- und Torsionsteifigkeit um die in Fig. 5 strichliniert dargestellten Symmetrieachsen des Vierkantrohres 5 erreicht.

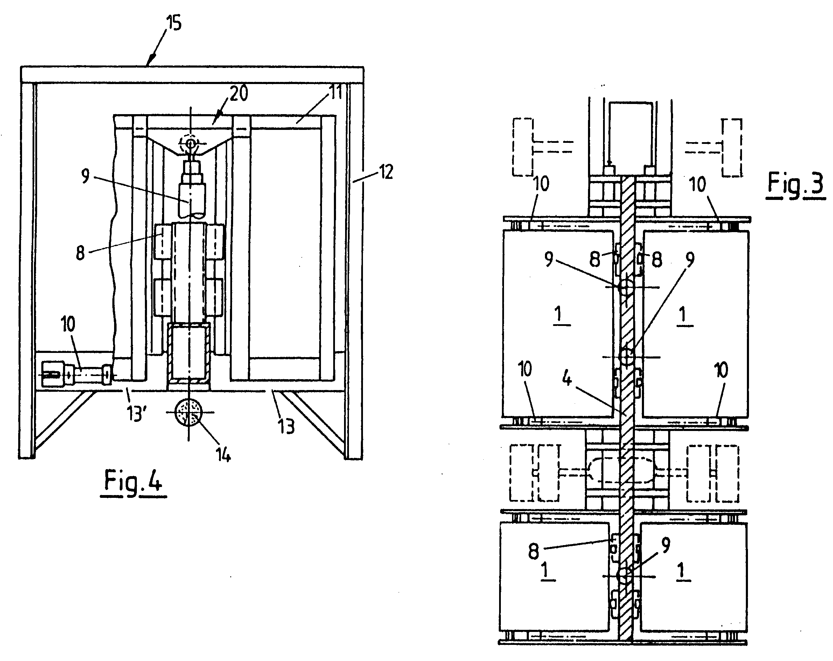

Bezugnehmend auf Fig. 3 ist ein Schnitt entlang der Linie III-III der Fig. 1 dargestellt, wobei auf die Darstellung der Fahrerkabine und der Frachträume 2 des Fahrzeuges verzichtet wurde.

Jede der absenkbaren Ladeboxen 1 ist in zwei Führungsschienen 8 geführt, wobei das Heben und Senken der Ladeboxen 1 jeweils mittels zweier als Hydraulikzylinder 9 ausgeführter Hubeinrichtungen erfolgt, die auf dem Mittelträger 4 angebracht sind. Die Führungsschienen 8 verlaufen vertikal, also weitgehend senkrecht zur Fahrbahnebene, und können auch an nicht dargestellten oberen und unteren Querträgern befestigt sein. In dem vorliegenden Ausführungsbeispiel sind die Führungsschienen 8 jedoch am Mittelträger 4 befestigt.

Die Verbindung zwischen den Hydraulikzylindern 9 und den Ladeboxen 1 erfolgt über eine Aufnahmeeinrichtung 20 (siehe Fig. 4), die fest mit den Hydraulikzylindern 9 verbunden ist, und in welche die Ladeboxen 1 einfach eingehängt werden können, so daß eine leichte und problemlose Auswechselbarkeit der Ladeboxen 1 möglich ist. Alternativ können die Ladeboxen 1 jedoch auch fest mit der Aufnahmeeinrichtung 20 verbunden sein.

Selbstverständlich können die Ladeboxen 1 auch mittels eines Pneumatikzylinder oder über einen Elektromotor, der beispielsweise ein Schneckengetriebe oder eine Hubspindel antreibt, angehoben und abgesenkt werden. Da allerdings bei vielen Lastkraftwagen bereits eine Hydraulik- und/oder Pneumatikanlage vorhanden ist, erfolgt auch der Antrieb der Ladeboxen 1 vorzugsweise hydraulisch oder pneumatisch.

Um ein unkontrolliertes Absenken der Ladeboxen 1, insbesondere während des Fahrbetriebes des Fahrzeuges, zu vermeiden, sind Sicherungseinrichtungen vorgesehen, die in dem vorliegenden Ausführungsbeispiel als Pneumatikzylinder 10 ausgeführt sind, welche eine geeignete Verriegelungseinrichtung betätigen. Die Sicherungseinrichtungen 10 sind an Querträgern befestigt und vertikal verlaufend angeordnet. Sollte durch einen Defekt im Hydraulikkreislauf, beispielsweise durch ein Leck, versehentlich einmal versucht werden, eine Ladebox 1 abzusenken, so bleibt dieser an der Verriegelung der Sicherungseinrichtung 10 hängen und es besteht keine Gefahr, daß die Ladebox 1 unkontrolliert auf der Fahrbahnebene aufschlägt.

Fig. 4 zeigt einen Schnitt entlang der Linie IV-IV von Fig. 1. Die Anordnung von unbewegten Quer- und Vertikalträgern 11, 12, 13, 13' und der Führungsschienen 8, welche am Mittelträger 4 befestigt sind, ist deutlich zu erkennen, ebenso wie die Anordnung der Hydraulikzylinder 9 auf dem Mittelträger 4 und die Anordnung der Sicherungseinrichtung 10. Im Bereich der Querträger 13 und 13' verläuft die Gelenkwelle 14 des Fahrzeuges. Es soll an dieser Stelle noch einmal klar herausgestellt werden, daß die Verbindung von der Vorderachse zur Hinterachse des Lastkraftwagens nur über den Mittelträger 4 erfolgt, der somit auch den größten Teil der auftretenden Kräfte aufnehmen muß, und über die Gelenkwelle 14, die aber lediglich das Antriebsdrehmoment vom Motor an die Hinterachse des Lastkraftwagens überträgt. Der Mittelträger 4 verläuft, wie bereits erwähnt, im oberen Bereich des Aufbaus bzw. Rahmens eines Serienlastkraftwagens unterhalb der Dachverstrebung und über der Gelenkwelle 14.

Die auf dem Mittelträger 4 angeordneten Hydraulikzylinder 9 sind mit einer sattelförmigen bzw. brückenförmigen Aufnahmeeinrichtung 20 gekoppelt, an welcher wiederum über Querträger 11 die Ladeboxen 1 angebracht sind.

Um die Ladeboxen 1 und die Frachträume 2 herum ist ein fester Rahmen angeordnet, welcher nicht absenkbar ist, d.h. es ist eine feste Dachverstrebung 15 vorgesehen, unter welcher sich die absenkbaren Ladeboxen 1 befinden. Werden nun die Ladeboxen 1 bis zur Fahrbahnebene abgesenkt oder, wie eingangs erwähnt, bis auf die Höhe einer Kopframpe angehoben, so bleiben hierbei die Dachverstrebung 15 sowie die Vertikal- und Querträger, mit denen die Dachverstrebung 15 verbunden ist, in einer festen Position.

Dies bedeutet, daß während des normalen Fahrbetriebes, wenn die Ladeboxen auf eine Höhe von ca. 400 mm über der Fahrbahnebene angehoben sind, zwischen den Ladeboxen 1 bzw. den Frachträumen 2 und der Dachverstrebung 15 ein Freiraum verbleibt.

Über den Ladeboxen 1 und den Frachträumen 2 ist die feste, in der Fig. 6 dargestellte, Dachverstrebung 15 angeordnet, die mit Blech oder einer Plane beplankt werden kann, so daß die Ladeboxen 1 und die Frachträume 2 sowie insbesondere die Vorrichtung zum Heben und Senken der Ladeboxen 1 vor Witterungseinflüssen weitgehend geschützt sind. Außerdem können auch von der Dachverstrebung 15 Kräfte aufgenommen werden, so daß eine ausreichende Stabilität des Fahrzeugaufbaus gegeben ist, d.h. die auftretenden Kräfte werden wenigstens teilweise in die Dachverstrebung 15 eingeleitet und von dieser aufgenommen, da diese zusammen mit den Vertikal- und Querträgern ein robustes, feststehendes Gerippe bzw. einen Rahmen darstellt.

Die Vertikalträger, welche die oberen und unteren Querträger des Fahrzeugaufbaus miteinander verbinden, können auch als Führungsschiene 8 verwendet werden, bzw. die Führungsschiene 8 kann in diese Vertikalträger vorteilhaft integriert werden, so daß sich der Montageaufwand für die erfindungsgemäße Vorrichtung verringert.

## Patentansprüche

1. Fahrzeug mit einem Aufbau zum Transportieren von Behältern, Kästen oder sonstigem Ladegut, insbesondere von Getränkekisten, wobei mehrere Ladeboxen zur Aufnahme der Behälter, Kästen oder dem sonstigen Ladegut vorgesehen sind und wenigstens ein Teil der Ladeboxen aus einer Fahrstellung bis zur Fahrbahnebene absenkbar ist, wobei die Ladeboxen an einem in Längsrichtung des Fahrzeuges verlaufenden Mittelträger beidseitig direkt oder indirekt befestigt und an einer mittels einer Hubeinrichtung heb- und senkbaren Aufnahmeeinrichtung angeordnet sind, und wobei über den Ladeboxen ein feststehendes Dach vorgesehen ist,
**dadurch gekennzeichnet,** daß das Dach eine Dachverstrebung (15) zur Aufnahme wenigstens eines Teils der an dem Fahrzeug angreifenden Kräfte aufweist, und daß die Ladeboxen (1) aus der Stellung im normalen Fahrbetrieb auf Rampenhöhe anhebbar sind, wobei während des normalen Fahrbetriebes des Fahrzeuges zwischen den Ladeboxen (1) und dem Dach ein Freiraum verbleibt.

2. Fahrzeug nach Anspruch 1,
**dadurch gekennzeichnet,** daß die Träger der Dachverstrebung (15) diagonal über den Ladeboxen (1) über die gesamte nutzbare Länge des Fahrzeugaufbaus angeordnet sind.

3. Fahrzeug nach Anspruch 1 oder 2,
**dadurch gekennzeichnet,** daß die Dachverstrebung (15) an mehreren weitgehend senkrecht zur Fahrbahnoberfläche verlaufenden Vertikalträgern angebracht ist.

4. Fahrzeug nach Anspruch 3,
**dadurch gekennzeichnet,** daß die Vertikalträger an quer zur Fahrzeuglängsachse verlaufenden Querträgern (11,12,13,13') angebracht sind.

5. Fahrzeug nach Anspruch 1 oder 4,
**dadurch gekennzeichnet,** daß die Querträger aus oberen (11,12) und unteren (13, 13') Querträgern bestehen.

6. Fahrzeug nach Anspruch 1,
**dadurch gekennzeichnet,** daß die Hubeinrichtung (9) hydraulisch oder pneumatisch angetrieben ist.

7. Fahrzeug nach Anspruch 1,
**dadurch gekennzeichnet,** daß die Hubeinrichtung (9) als Hubspindel ausgeführt ist.

8. Fahrzeug nach einem der Ansprüche 1 bis 7,
**dadurch gekennzeichnet,** daß die Hubeinrichtung (9) auf dem Mittelträger (4) angeordnet ist.

9. Fahrzeug nach einem der Ansprüche 1 bis 8,
**dadurch gekennzeichnet,** daß jede Ladebox (1) in wenigstens zwei Führungsschienen (8) geführt ist.

10. Fahrzeug nach Anspruch 9,
**dadurch gekennzeichnet,** daß die Führungsschienen (8) in die Vertikalträger integriert oder an diesen befestigt sind.

11. Fahrzeug nach einem der Ansprüche 1 bis 10,
**dadurch gekennzeichnet,** daß jede Ladebox (1) durch wenigstens eine Sicherungseinrichtung (10) gesichert ist.

12. Fahrzeug nach Anspruch 11,
**dadurch gekennzeichnet,** daß die Sicherungseinrichtung als Pneumatikzylinder (10) ausgeführt ist.

13. Fahrzeug nach einem der Ansprüche 1 bis 12,
**dadurch gekennzeichnet,** daß die Ladeboxen (1) durch Jalousien oder Türen verschließbar sind.

## Claims

1. Vehicle with a body for transporting containers, cases or other loads, in particular beverage crates, in which a plurality of loading boxes are provided for receiving the containers, cases or other loads and at least part of the loading boxes can be lowered from a driving position to the road surface, the loading boxes are secured directly or indirectly at both sides to a central support extending in the longitudinal direction of the vehicle and are arranged on a receiving means which can be raised and lowered by means of a lifting means, and a fixed roof is provided above the loading boxes, characterised in that the roof has a roof strut (15) for taking up at least part of the forces acting on the vehicle and that the loading boxes (1) can be raised from their position during normal driving to ramp height, clearance remaining between the loading boxes (1) and the roof during normal driving of the vehicle.

2. Vehicle according to claim 1, characterised in that the supports of the roof strut (15) are arranged diagonally across the loading boxes (1) over the entire usable length of the vehicle body.

3. Vehicle according to claim 1 or claim 2, characterised in that the roof strut (15) is fitted to a plurality of vertical supports extending substantially perpendicularly to the road surface.

4. Vehicle according to claim 3, characterised in that the vertical supports are fitted to crossbars (11, 12, 13, 13') extending transversely to the longitudinal axis of the vehicle.

5. Vehicle according to claim 1 or claim 4, characterised in that the crossbars consist of upper (11, 12) and lower (13, 13')crossbars.

6. Vehicle according to claim 1, characterised in that the lifting means (9) is operated hydraulically or pneumatically.

7. Vehicle according to claim 1, characterised in that the lifting means (9) is in the form of a jackscrew.

8. Vehicle according to one of claims 1 to 7, characterised in that the lifting means (9) is arranged on the central support (4).

9. Vehicle according to one of claims 1 to 8, characterised in that each loading box (1) is guided in at least two guide rails (8).

10. Vehicle according to claim 9, characterised in that the guide rails (8) are integrated into the vertical supports or are secured thereto.

11. Vehicle according to one of claims 1 to 10, characterised in that each loading box (1) is secured by at least one securing means (10).

12. Vehicle according to claim 11, characterised in that the securing means is in the form of a pneumatic cylinder (10).

13. Vehicle according to one of claims 1 to 12, characterised in that the loading boxes (1) can be closed off by shutters or doors.

## Revendications

1. Véhicule comportant un châssis pour assurer le transport de réservoirs, de conteneurs ou d'autres marchandises similaires, en particulier de caisses à boissons, dans lequel plusieurs boîtes de chargement pour recevoir des réservoirs, des conteneurs ou les autres marchandises similaires sont prévues, et au moins une partie des boîtes de chargement sont agencées pour être abaissées d'une position de transport jusqu'au niveau de la route, les boîtes de chargement étant directement ou indirectement fixées des deux côtés à un élément porteur central s'étendant axialement le long du véhicule, et à un équipement récepteur au moyen d'une installation de levage agencée pour lever et abaisser ledit équipement récepteur, et comportant en outre un toit s'étendant par-dessus les boîtes de chargement,
**caractérisé en ce que** le toit comporte une structure de renforcement du toit (15) pour absorber au moins une partie des forces appliquées au véhicule, et en ce que les boîtes de chargement (1) sont conçues pour pouvoir être soulevées de leur position de transport normale à la hauteur d'une rampe de chargement, un espace libre subsistant entre les boîtes de chargement (1) et le toit, lorsque le véhicule est en circulation.

2. Véhicule selon la revendication 1,
**caractérisé en ce que** les éléments porteurs de la structure de renforcement du toit (15) s'étendent en diagonale au-dessus des boîtes de chargement (1) sur la longueur utile totale du châssis du véhicule.

3. Véhicule selon la revendication 1 ou 2,
**caractérisé en ce que** la structure de renforcement (15) est montée sur plusieurs montants verticaux disposés perpendiculairement par rapport à la route.

4. Véhicule selon la revendication 3,
**caractérisé en ce que** les montants verticaux sont fixés à des traverses (11,12, 13, 13') transversales par rapport à l'axe du véhicule.

5. Véhicule selon la revendication 1 ou 4,
**caractérisé en ce que** les traverses sont constituées de traverses supérieures (11,1 2) et de traverses inférieures (13, 13')

6. Véhicule selon la revendication 1,
**caractérisé en ce que** l'installation de levage (9) est hydraulique ou pneumatique.

7. Véhicule selon la revendication 1,
**caractérisé en ce que** l'installation de levage (9) comporte une vis de levage.

8. Véhicule selon l'une des revendications 1 à 7,
**caractérisé en ce que** l'installation de levage (9) est montée sur le support central (4).

9. Véhicule selon l'une des revendications 1 à 8,
**caractérisé en ce que** chaque boîte de chargement (1) est guidée dans au moins deux rails de guidage (8).

10. Véhicule selon la revendication 9,
**caractérisé en ce que** les rails de guidage (8) sont intégrés dans les montants verticaux ou fixés sur ces derniers.

11. Véhicule selon l'une des revendications 1 à 10,
**caractérisé en ce que** chaque boîte de chargement (1) est assurée au moyen d'au moins un dispositif de sécurité (10).

12. Véhicule selon la revendication 11,
**caractérisé en ce que** le dispositif de sécurité est constitué d'un vérin pneumatique (10).

13. Véhicule selon l'une des revendications 1 à 12,
**caractérisé en ce que** les boîtes de chargement (1) sont obturées par des portes ou des jalousies.
